# EUROPEAN PATENT SPECIFICATION

(11) **EP 1 354 901 B1**
(45) Date of publication and mention of the grant of the patent: **22.03.2006**
(21) Application number: 02008711.0
(22) Date of filing: 18.04.2002
(51) Int. Cl.: C08F 297/08, C08F 10/00, C08L 23/10

(54) **Propylene polymer composition with improved mechanical properties**
Polypropylenemischung mit verbesserten mechanischen Eigenschaften
Composition de polypropylène ayant des propriétés mécaniques améliorées

(43) Date of publication of application: 22.10.2003
(73) Proprietor: Borealis GmbH, 2323 Schwechat-Mannswörth (AT)
(72) Inventor: Reichelt, Norbert, Dr., 4501 Neuhofen (AT); Pham, Tung, Dr., 4040 Linz (AT)
(74) Representative: VA TECH Patente GmbH & Co

(56) References cited:
- EP-A- 0 942 021
- EP-A- 1 195 406
- WO-A-01/36502
- PATENT ABSTRACTS OF JAPAN vol. 1995, no. 02, 31 March 1995 (1995-03-31) & JP 06 329869 A (RICOH CO LTD), 29 November 1994 (1994-11-29)

## Description

The invention relates to a heterophasic propylene polymer composition with good processability and an improved balance of mechanical parameters.
More particularly, the invention relates to a heterophasic propylene polymer composition with an MFR > 100 g/10 min (230 °C/2.16 kg) and to a process for its preparation.
Even more particularly, the propylene polymer composition to which the invention relates is comprised of 70 to 95 wt% of a matrix phase comprising a propylene homopolymer and/or a propylene copolymer with at least 80 wt% of propylene and up to 20 wt% of ethylene and/or a C₄-C₁₀ α-olefin, and 5 to 30 wt% of a disperse phase comprising an ethylene rubber copolymer with from 20 to 70 wt% of ethylene and 80 to 30 wt% of propylene and/or a C₄-C₁₀ α-olefin, the ethylene rubber copolymer being distributed within the polymer composition in the form of particles, which propylene polymer composition has an MFR of > 100 g/10 min (230 °C/2.16 kg).

Recently, the polypropylene market required new grades of high impact polypropylenes with improved processability, i.e. high MFR. The additional costs which would arise from a modification step should be as low as possible because the intended market segments, e.g. injection moulded parts for thin-wall packaging and food packaging, are not susceptive to high priced grades.
In order to achieve a higher MFR for a propylene polymer, the technique of peroxide-induced degradation is a widely applied technology, which is also called visbreaking. The advantages of a higher MFR are e.g. reduced injection moulding cycle time, a lower required mould pressure, better surface quality of products, etc.

Heterophasic propylene polymers are typically chosen for their high impact strength, which makes them especially suitable for applications such as injection moulding for thin-wall packaging and food packaging.
In case of heterophasic propylene polymers the conventional degradation with the typical degradation peroxides leads to a decrease in toughness as well as in stiffness. The improvement in flowability is accompanied by a decrease in mechanical performance.

EP 0 942 021 A1 discloses polypropylene/propylene-ethylene copolymer compositions being the product of a two stage polymerisation. The polymer of the first stage has a MFR of from 100 to 1000 g/10 min and a tie molecule volume content (β) of at least 1.10.

WO 01/36502 A1 discloses heterophasic propylene copolymers which are obtained by visbraking with 2,5-Dimethyl-2,5-di(tert-butylperoxy)hexane. Some of the disclosed copolymers have good processability, they are however lacking in stiffness.

It is therefore the object of the present invention to provide a novel heterophasic propylene polymer composition with good processability, i.e. MFR > 100 g/10 min (230 °C/2.16 kg) which meets the following requirements: High impact strength shall be combined with satisfactory stiffness values.

What is regarded as "high impact strength" is dependent upon the actual MFR and chemical composition, but values for the Charpy notched impact strength according to ISO 179/1eA at +23 °C of> 4.0 kJ/m², better of > 4.5 kJ/m² and, still better, of > 5.0 kJ/m² are considered as "high impact strength" for propylene/ethylene heterophasic copolymers with MFR's > 100 g/10 min. Comparative values for the Charpy notched impact strength according to ISO 179/1eA at -20°C for propylene/ethylene heterophasic copolymers with MFR's > 100 g/10 min are > 2.0 kJ/m², better > 2.5 kJ/m² and still better, > 3.0 kJ/m². Stiffness is considered satisfactory for propylene/ethylene heterophasic copolymers with MFR's > 100 g/10 min with flexural moduli according to ISO 178 from 1100 - 1300 MPa. Still higher values are of course more preferable.
It is particularly desirable, that - compared to conventional grades - the inventive polymer composition shall have an improved impact strength and only slightly reduced, preferably about the same and more preferably improved stiffness.

The object of the present invention, for a propylene polymer composition with an MFR of > 100 g/10 min (230 °C/2.16 kg), has been achieved by a composition where ethylene rubber copolymer particles with a particle size of < 0.8 µm are present in an amount of at least 50 % based on the total amount of rubber particles with particle sizes of from 0 to 2.0 µm.
It is believed, that the observed increase in both properties, impact strength and stiffness, which can usually only be influenced in their respective opposite direction, is due to the high amount of rubber particles with very small diameters.

In this disclosure and in the claims the term particle size is intended to mean the equivalent spherical diameter of the particle.
The matrix phase of the heterophasic polymer may either be a propylene homopolymer or a copolymer of propylene and ethylene and/or a higher α-olefin or mixtures of such homo- and copolymers. In the case of copolymers as matrix phase of the heterophasic polymers it is preferred that they are random copolymers.
The propylene copolymer of which the matrix phase of the inventive heterophasic polymer is optionally comprised may be a binary copolymer or may be comprised of more than two comonomers, e.g. be a terpolymer.
Up to 20 wt% of the propylene copolymer may be other than propylene, i.e. ethylene and/or an α-olefin.

Examples of the α-olefin which may be one of the comonomers are 1-butene, 1-pentene, 4-methyl-1-pentene, 1-hexene, 1-heptene or 1-octene. Particularly preferred is 1-butene.
Examples for the propylene copolymer of the matrix phase are random propylene/ethylene, random propylene/butene and random propylene/ethylene/butene poylmers.
The propylene homo- and/or copolymer which comprise the matrix phase of the heterophasic polymer are together present in an amount of from 70 to 95 wt%, preferably 80 to 90 wt%, based on the total weight of the heterophasic polymer.
The ethylene rubber copolymer which comprises the disperse phase of the heterophasic polymer is present in an amount of from 5 to 30 wt%, preferably 10 to 20 wt%, based on the total weight of the heterophasic polymer.
Generally, heterophasic polymers with higher amounts of matrix phase exhibit higher stiffness.
The ethylene rubber copolymer itself may be comprised of from 20 to 70 wt%, preferably 40 to 60 wt% of ethylene and 80 to 30 wt%, preferably 60 to 40 wt% of propylene and/or a C₄₋C₁₀ α-olefin. The α-olefin is preferably selected from the list of 1-butene, 1-pentene, 4-methyl-1-pentene, 1-hexene, 1-heptene and 1-octene, where 1-butene and 1-octene are particularly preferred.

According to a further embodiment ethylene rubber copolymer particles with a particle size of < 1.2 µm are present in an amount of at least 75 % based on the total amount of rubber particles with particle sizes of from 0 to 2.0 µm.
It has been observed that it is not only the average particle size which determines the mechanical performance of heterophasic polymers. Another important factor of influence is the particle size distribution. While according to the basic embodiment of the present invention the ethylene rubber copolymer particles with diameters < 0.8 µm are present in an amount of at least 50 %, it is additionally preferable, that ethylene rubber particles with diameters < 1.2 µm are present in an amount of at least 75 %. This means, that for achieving the desired properties the percentage of particles with "large" (≥ 1.2 µm) diameters has to be small (< 25 %).

Even better properties can be achieved with particle size distributions where an increasing amount of particles is comprised of particles with smaller diameters.

According to an advantageous embodiment ethylene rubber copolymer particles with a particle size of < 0.8 µm are present in an amount of at least 75 %, preferably of at least 85 %, based on the total amount of rubber particles with particle sizes of from 0 to 2.0 µm.

According to a still further improved embodiment ethylene rubber copolymer particles with a particle size of < 1.2 µm are present in an amount of at least 85 %, preferably of at least 95 %, based on the total amount of rubber particles.

It is further preferred, that heterophasic polymers of the present invention have a molecular weight ratio of the amount soluble in cold xylene to that insoluble in cold xylene M_{w}(XCS)/M_{w}(XCU) ≥ 1.7, preferably ≥ 1.9. It is even more preferred to be ≥ 2.3. Even molecular weight ratios of ≥ 3.0 are achievable, while simultaneously achieving very fine dispersion.
The proportion soluble in cold xylene (XCS) roughly corresponds to the amount of ethylene rubber copolymer.
Until now it has been thought that for achieving good dispersion of the ethylene rubber copolymer in the matrix polymer it is necessary that matrix polymer and ethylene rubber copolymer should have comparable molecular weight and molecular weight distribution. As a rule, it was thought, that smaller particle sizes of the ethylene rubber copolymer can be achieved in higher amounts when the two phases are more compatible, i.e. more similar regarding their molecular weight.
The novel heterophasic polymers of the present invention are different from this conventional assumption insofar, as they show an even finer dispersion with increased molecular weight ratio M_{w}(XCS)/M_{w}(XCU).
Accordingly, it is preferred, that ethylene rubber copolymer particles with a particle size of < 0.8 µm are present in an amount of at least 75 %, preferably of at least 85 %, based on the total amount of rubber particles with particle sizes of from 0 to 2.0 µm and that it has a molecular weight ratio of the amount soluble in cold xylene to that insoluble in cold xylene M_{w}(XCS)/M_{w}(XCU) ≥ 2.3.

According to a further advantageous embodiment the heterophasic polypropylene composition contains from 0.01 to 10 wt% based on the weight of the polymer composition of a chemically bound bifunctionally unsaturated monomer.

"Bifunctionally unsaturated" as used above means the presence of two non-aromatic double bonds, as in e.g. divinylbenzene or cyclopentadiene. Only such bifunctionally unsaturated compounds are used which can be polymerised with the aid of free radicals. The bifunctionally unsaturated monomer is in its chemically bound state not actually "bifunctionally unsaturated", because the two double bonds are each used for a covalent bond to the polymer chains of the matrix and/or the elastomeric polymer.
Reaction of the bifunctionally unsaturated monomer with the heterophasic polymer may be performed in the presence of a radical forming agent, e.g. a thermally decomposable peroxide, ionising radiation or microwave radiation.

The bifunctionally unsaturated monomers may be
- divinyl compounds, such as divinylaniline, m-divinylbenzene, p-divinylbenzene, divinylpentane and divinylpropane;
- allyl compounds, such as allyl acrylate, allyl methacrylate, allyl methyl maleate and allyl vinyl ether;
- dienes, such as 1,3-butadiene, chloroprene, cyclohexadiene, cyclopentadiene, 2,3-dimethylbutadiene, heptadiene, hexadiene, isoprene and 1,4-pentadiene;
and mixtures of these unsaturated monomers.
In the heterophasic polypropylene of the invention the chemically bound bifunctionally unsaturated monomer acts as coupling agent between the matrix and the disperse phase. It is believed that those molecules, which - with one of their functionalities - are bound to a polymer molecule of the matrix phase and - with their second functionality - are bound to a polymer molecule of the disperse phase, effect the coupling action and thus promote dispersion of the elastomeric copolymer within the matrix phase.
Preferred bifunctionally unsaturated monomers are 1,3-butadiene, isoprene, dimethyl butadiene and divinylbenzene.

In connection with the above it is particularly preferred that the heterophasic polymer of the invention contains from 0.1 to 2 wt% based on the weight of the polymer composition of a chemically bound bifunctionally unsaturated monomer.
While measurable effects are already observed with small concentrations of bifunctionally unsaturated monomer (depending also on the nature of the monomer) it is preferred that the heterophasic polymer contains at least 0.1 wt% of the bifunctionally unsaturated monomer.
With increasing amounts of bifunctionally unsaturated monomer, an influence on the mechanical parameters of the heterophasic composition makes itself noticeable, which is not related to the coupling effect. It is therefore preferred that the heterophasic polymer contains up to 2 wt% of the bifunctionally unsaturated monomer.
With the bifunctionally unsaturated monomer it is possible to achieve a molecular weight ratio of the amount soluble in cold xylene to that insoluble in cold xylene M_{w}(XCS)/M_{w}(XCU) up to and even above 3.0, while simultaneously achieving a very fine morphology.

Accordingly, it is preferred, that with bifunctionally unsaturated monomer being present in the propylene polymer composition, ethylene rubber copolymer particles with a particle size of < 1.2 µm are present in an amount of at least 85 %, preferably of at least 95 %, based on the total amount of rubber particles with particle sizes of from 0 to 2.0 µm and that it has a molecular weight ratio of the amount soluble in cold xylene to that insoluble in cold xylene M_{w}(XCS)/M_{w}(XCU) ≥ 2.9, preferably ≥ 3.0.

There is also a process provided for producing the heterophasic propylene polymers composition according to the invention, comprising the following steps:
mixing a heterophasic polyolefin composition comprising
70 to 95 wt% of a matrix phase comprising a propylene homopolymer and/or a propylene copolymer with at least 80 wt% of propylene and up to 20 wt% of ethylene and/or a C₄-C₁₀ α-olefin, and
5 to 30 wt% of a disperse phase comprising an ethylene rubber copolymer with from 20 to 70 wt% of ethylene and 80 to 30 wt% of propylene and/or a C₄-C₁₀ α-olefin, the ethylene rubber copolymer being distributed within the polyolefin composition in the form of particles and ethylene rubber copolymer particles with a particle size of from 0.8 to 2.0 µm are present in an amount of ≥ 50 % based on the total amount of ruber particles with particle sizes of from 0 to 2.0 µm, the polyolefin composition having an MFR of from 25 to 100 g/10 min (230 °C/2.16 kg),
with 0.01 to 3 wt% based on the polyolefin composition of an organic peroxide having a half life time t(1/2) at 110 °C of > 6 min and a half life time t(1/2) at 150 °C of < 6 min and heating and melting the polyolefin/peroxide mixture.
A preferred temperature range for heating and melting the polyolefin/peroxide mixture is from 110 to 230 °C. A preferred MFR-range of the educt-polyolefin composition is from 35 to 75g/10min. The peroxide may be added to the polyolefin as pure substance, as masterbatch or in a solution of an organic solvent.

Peroxides which are thermally decomposable upon the conditions of heating and melting the polyolefin/peroxide mixture and which meet the requirement of having a half life time t(1/2) at 110°C of > 6 min and a half life time t(1/2) at 150°C of < 6 min are suitable. The following organic peroxides are suitable for the above process:
Dibenzoyl peroxide, tert-Butyl peroxy-2-ethylhexanoate, tert-Amyl peroxy-2-ethylhexanoate, tert-Butyl peroxydiethylacetate, 1,4-Di(tert-butylperoxycarbo)cyclohexane, tert-Butyl peroxyisobutyrate, 1,1-Di(tert-butylperoxy)-3,3,5-trimethyl-cyclohexane, Methyl isobutyl ketone peroxide, 2,2-Di(4,4-di(tert-butylperoxy)cyclohexyl)propane, 1,1-Di(tert-butylperoxy)cyclohexane, tert-Butyl peroxy-3,5,5-trimethylhexanoate, tert-Amylperoxy 2-ethylhexyl carbonate, 2,2-Di(tert-butylperoxy)butane, tert-butylperoxy isopropyl carbonate, tert-Butylperoxy 2-ethylhexyl carbonate, tert-Butyl peroxyacetate, tert-butyl peroxybenzoate, Di-tert-amyl peroxide and mixtures of these organic peroxides.

It has surprisingly been observed, that peroxides used in conventional degradation processes exert different modes of action. One effect is, that the peroxides effect a breakage of the longest chains of the polymer molecules and, consequently, a corresponding decrease in viscosity of the polymer. A second effect is, that peroxide-induced radicals are recombining. Both effects are to a certain extent always present in peroxide induced degradation processes. The actual extent of each effect is influenced by the nature of the peroxide.
For the present invention it is preferred to use peroxides where the second mode of action is increased compared to "pure" degradation peroxides, and preferably where the second mode of action is predominant.

According to a preferred embodiment of the inventive process the employed peroxides are of the above mentioned type and are selected from tert-butylperoxy isopropyl carbonate and tert-butyl peroxybenzoate.

According to a further embodiment of the process according to the invention from 0.05 to 10 wt%, preferably from 0.2 to 3 wt%, based on the weight of the polyolefin composition of a bifunctionally unsaturated monomer are added to the polyolefin composition.
The bifunctionally unsaturated monomer may be added at any time before or during heating and melting the poylolefin/peroxide mixture. The bifunctionally unsaturated monomer may also be added to the polyolefin before it is mixed with the peroxide.
According to a preferred embodiment the bifunctionally unsaturated monomer is in gaseous or liquid state absorbed by the - still solid - polyolefin composition.

According to a still further embodiment the bifunctionally unsaturated monomer is solvatised in an organic solvent and the solution is applied to the polyolefin before or during heating and melting the polyolefin. It is particularly preferred to apply a solution of bifunctionally unsaturated monomer in an organic solvent, e.g. acetone, directly into the polyolefin melt, e.g. into the melting extruder.

According to one further embodiment of the present invention the educt heterophasic polyolefin composition has a molecular weight ratio of the amount soluble in cold xylene to that insoluble in cold xylene M_{w}(XCS)/M_{w}(XCU) of from 1.0 to 1.7.

The educt heterophasic polyolefin composition may be produced by multistage process polymerisation of propylene or propylene and ethylene and/or an α-olefin such as bulk polymerisation, gas phase polymerisation, slurry polymerisation, solution polymerisation or combinations thereof using conventional catalysts. Those processes are well known to one skilled in the art.
A preferred process is a combination of a bulk slurry loop reactor(s) and gas phase reactor(s). The matrix polymer can be made either in loop reactors or in a combination of loop and gas phase reactor.
The polymer produced in this way is transferred into another reactor and the disperse phase, which in this case is a propylene/α-olefin rubber, is polymerised. Preferably this polymerisation step is done in a gas phase polymerisation.
A suitable catalyst for the polymerisation of the educt heterophasic polyolefin composition is any stereospecific catalyst for propylene polymerisation which is capable of polymerising and copolymerising propylene and comonomers at a temperature of 40 to 110 °C and at a pressure form 10 to 100 bar. Ziegler Natta catalysts as well as metallocene catalysts are suitable catalysts.
One skilled in the art is aware of the various possibilities to produce such heterophasic systems and will simply find out a suitable procedure to produce suitable educt heterophasic polyolefin compositions which are used in the present invention.
The educt heterophasic polyolefin composition may also be produced by mixing and melt blending a propylene homo- or copolymer with an ethylene rubber copolymer.

According to a still further object of the invention the heterophasic propylene polymer compositions of the invention are used for the production of articles having a Charpy notched impact strength (according to ISO 179/1eA) at +23 °C of > 4.5 kJ/m², preferably of > 5 kJ/m², more preferably > 6 kJ/m².

The heterophasic propylene polymer compositions according to the invention are preferably used for the production of injection-moulded parts for thin-wall packaging and food packaging applications, e.g. yoghourt cups, ice cream and soft drink cups, margarine trays.

The heterophasic propylene polymer compositions according to the invention may comprise, as additives, from 0.01 to 2.5 % by weight of stabilizers and/or from 0.1 to 1 % by weight of antistats and/or from 0.2 to 3 % by weight of pigments and/or from 0.05 to 1 % by weight of nucleating agents and/or from 1 to 40 % by weight of fillers and/or reinforcing materials and/or from 2 to 20 % by weight of flame retardants and/or from 0.01 to 1 % by weight of processing aids, in each case based on the weight of the heterophasic propylene polymer composition.

### Description of measurement methods

### XCS

Xylene solubles were determined at 23 °C according to ISO 6427. Xylene solubles are defined as the percent by weight that stays in solution after the polymer sample is dissolved in hot xylene and the solution is allowed to cool to 23 °C. XCS largely correlates to the rubber content of the heterophasic polymer.

**Comonomer contents** were measured with Fourier transform infrared spectroscopy (FTIR) calibrated with ¹³C-NMR.

**Molecular weights** were determined with gel permeation chromatography (GPC).

### MFR

The melt flow rates were measured with a load of 2.16 kg at 230 °C. The melt flow rate is that quantity of polymer in grams which the test apparatus standardized to ISO 1133 extrudes within 10 minutes at a temperature of 230 °C under a load of 2.16 kg.

### Tensile test

Tensile test was performed according to ISO 527-3. **Tensile modulus (E-modulus)** was also determined according to ISO 527-3.

### Flexural test

The flexural test was carried out according to the method of ISO 178 by using injection molded test specimens as described in EN ISO 1873-2 (80 x 10 x 4 mm).

### Charpy notched impact strength

The Charpy notched impact strength was determined according to ISO 179 / 1eA at 23 °C and at -20 °C by using injection moulded test specimens as described in EN ISO 1873-2 (80 x 10 x 4 mm).

### Particle sizes

Particle sizes were determined according to the following procedure:
1) sample specimens were stained with gaseous RuO4 according to a procedure described in: *Montezinos, D.; Wells, B.G.; Burns, J.L.: Polym. Sci. Polym. Lett. Ed. 1985, 23, 421-452*
2) transmission electron micrographs were recorded with a Philips 300.
3) particle size evaluation was performed using the software *PC_image 2.2.05* of Foster Findlay Associates (Newcastle upon Tyne, U.K.). First a binary picture was produced by setting a threshold value. The threshold value depends on the actual picture, but was about 150 for each of the pictures. Then the filter operations Holefill and Open were used. The number of passes for the Open function also depends on the picture and was from 1-3 for each of the pictures.
An exact description of each function can be found in the literature: *Russ JC: The Image Processing Handbook. CRC Press London Tokyo, 1995*, *2nd ed.*

### Examples

### Heterophasic polymers:

The educt heterophasic polymers were produced in a two step process. In the first step a propylene homopolymer was polymerised (polymerisation in a loop reactor in liquid propylene) and in the second stage a propylene/ethylene rubber was polymerised in a gas phase reactor. As catalyst a Ziegler-Natta catalyst was used.
The characteristics of the educt heterophasic polymers are given in table 1.

### Example 1

A heterophasic propylene polymer (Polymer 1) in powder form (MFR=45g/10min at 230 °C/2.16kg), comprising 84 % by weight of a propylene homopolymer and 16 % by weight of an ethylene-propylene rubber copolymer (ethylene content 41 % by weight) is metered continuously into a continuous heatable through-flow mixer. 0.1 % by weight of calcium stearate and 0.5 % by weight of tert-butylperoxy isopropyl carbonate, based in each case on the polyolefin mixture, are then metered continuously into the through-flow mixer. With thorough and homogeneous mixing at 45 °C, the mixture of polyolefin, peroxide and additive is loaded by sorption with 0.15 % by weight of 1,3-butadiene, based on the polyolefin mixture, using a butadiene-nitrogen mixture with a residence time of 6 min at 82 °C. The reaction mixture is transferred to a twin-screw extruder (temperature profile 25/160/160/160/165/160/190/220/220/230 °C, throughput 10 kg/h) and, in contact with the butadiene-nitrogen mixture and with addition of 0.1 % by weight of tetrakis[methylene (3,5-di-tert-butylhydroxyhydrocinnamate)]methane and 0.1 % by weight of tris(2,4-di-tert-butylphenyl) phosphite, heated and melted, subjected to preliminary devolatilization with water metered in as entrainer and then to intensive devolatilization, discharged and pelletized.

The resulting heterophasic propylene polymer has a content of chemically bound butadiene of 0.11 % by weight, determined by IR spectroscopy, and a melt index of 133g/10min at 230°C/2.16 kg.

### Example 2

A heterophasic propylene polymer (Polymer 2) in powder form (MFR=60 g/10min at 230 °C/2.16kg) comprising 83 % by weight of a polypropylene homopolymer and 17 % by weight of an ethylene-propylene rubber copolymer (ethylene content 43 % by weight), premixed with 0.1 % by weight of calcium strearate, was fed continuously into a twin screw extruder with a screw diameter of 25 mm and a length-diameter-ratio UD of 40 (temperature profile 20/170/180/70/180/190/190/190/200/200/210 °C, throughput 10 kg/h)

After heating and melting of the polyolefin mixture (zones 1, 2 and 3), a solution of tert-butylperoxy isopropyl carbonate in acetone (10 wt%) was injected directly into zone 4 of the extruder, achieving a concentration of 0.37 % by weight, based on the polyolefin mixture.

The addition of 0.17 % by weight of 1,3-butadiene was accomplished by the injection of this co-agent into the same zone 4 of the extruder, however, through a second injection port.

The polymer melt / liquid /gas mixture was passed through the extruder, then to intensive devolatilization, discharged and pelletized.

The resulting heterophasic propylene polymer has a content of chemically bound butadiene of 0.12 % by weight, determined by IR spectroscopy, and a melt index of 125 g/10min at 230 °C/2.16kg.

### Example 3

Similar to example 2, however, with 0.32 % by weight of tert-butylperoxy isopropyl carbonate and without 1,3-butadiene (0 %).

The resulting heterophasic propylene polymer has a melt index of 134 g/10min at 230 °C/2.16kg.

### Example 4

According to example 1, however, with 0.45 % by weight of tert-butylperoxy isopropyl carbonate and without 1,3-butadiene (0 %).

### Example 5

According to example 2, however with 0.17 % by weight of tert-butylperoxy isopropyl carbonate and without 1,3-butadiene (0 %).

The following polymers were used for the examples:

**Table 1**

| Polymer | | Polymer 1 | Polymer 2 |
|---|---|---|---|
| | | | |
| matrix phase | | C3 | C3 |
| matrix phase | wt% | 84 | 83 |
| | | | |
| disperse phase | | C2/C3 | C2/C3 |
| C2 in disperse phase | wt% | 41 | 43 |
| | | | |
| MFR | (g/10min) | 45 | 60 |
| XCS | (wt%) | 16.1 | 18.2 |
| M_{w}(XCS)/M_{w}(XCU) | | | 1.988 |
| | | | |
| Tensile Modulus | (MPa) | 1476 | 1507 |
| Tensile Strength | (MPa) | 25.7 | 25.7 |
| Flexural Modulus | (MPa) | 1356 | 1346 |
| Flexural Strength | (MPa) | 38.3 | 37.9 |
| | | | |
| NIS (ISO179/1eA) +23 °C | (kJ/qm) | 6.5 | 5.9 |
| NIS (ISO179/1eA) -20 °C | (kJ/qm) | 3.6 | 3.4 |

Examples were produced according to the respective experimental procedure. Characteristics of the produced examples are given in table 2.

**Table 2**

| **Example** | | **4** | **1** | **3** | **2** | **5** |
|---|---|---|---|---|---|---|
| Base Polymer | | Polymer 1 | Polymer 1 | Polymer 2 | Polymer 2 | Polymer 2 |
| | | | | | | |
| Peroxide | | tert-butylperoxy isopropyl carbonate | | | | |
| Amount of peroxide | wt% | 0.45 | 0.5 | 0.32 | 0.37 | 0.17 |
| | | | | | | |
| Bifunctionally unsat. monomer | | 1,3-butadiene | | | | |
| Amount of bound monomer | wt% | 0 | 0.11 | 0 | 0.12 | 0 |
| | | | | | | |
| MFR | (g/10min) | 138 | 133 | 134 | 125 | 112 |
| M_{w}(XCS)/M_{w}(XCU) | | | | 2.396 | 3.017 | 1.924 |
| | | | | | | |
| Tensile Modulus | (MPa) | 1271 | 1261 | 1342 | 1310 | 1397 |
| Tensile Strength | (MPa) | 24.21 | 25.66 | 24.6 | 25.7 | 24.1 |
| Flexural Modulus | (MPa) | 1148 | 1180 | 1225 | 1214 | 1252 |
| Flexural Strength | (MPa) | 34.1 | 34.7 | 34.9 | 34.7 | 35.7 |
| | | | | | | |
| ISO179/1eA +23 °C | (kJ/qm) | 7.62 | 9.17 | 6.92 | 8.82 | 5.92 |
| ISO179/1eA -20 °C | (kJ/qm) | 4.1 | 3.7 | 4.2 | 4.9 | 3.7 |

Comparative Examples were produced according to the experimental procedure of Example 3. Characteristics of the produced Comparative Examples are given in table 3.

**Table 3**

| **Comp. Example** | | **C1** | **C2** | **C3** | **C4** |
|---|---|---|---|---|---|
| Base Polymer | | Polymer 1 | Polymer 1 | Polymer 2 | Polymer 2 |
| | | | | | |
| Peroxide | | 2,5-Dimethyl-2,5-di(tert-butylperoxy)hexane | | | |
| | wt% | 0.09 | 0.11 | 0.08 | 0.1 |
| | | | | | |
| MFR | (g/10min) | 106 | 133 | 108 | 129 |
| | | | | | |
| Tensile Modulus | (MPa) | 1295 | 1361 | 1295 | 1279 |
| Tensile Strength | (MPa) | 24.5 | 25.3 | 24.3 | 24.7 |
| Flexural Modulus | (MPa) | 1292 | 1357 | 1233 | 1224 |
| Flexural Strength | (MPa) | 37.6 | 39.4 | 35.9 | 35.5 |
| | | | | | |
| ISO179/1eA +23 °C | (kJ/qm) | 3.4 | 2.4 | 3.2 | 2.3 |
| ISO179/1eA -20 °C | (kJ/qm) | 1.8 | 1.4 | 1.7 | 1.3 |

Table 4 lists and compares different peroxides which are either used for the invention or which are conventionally used in degradation of polypropylenes.

**Table 4**

| **Peroxide Trade Name** | **Temperature [°C]** | **τ(1/2) [min]** | **T [°C] for τ(1/2) = 6 min** | **Peroxide Chemical name** |
|---|---|---|---|---|
| BPIC-C75 | 110 | 136.96 | 137.2 | tert-Butylperoxy isopropyl carbonate |
| BPIC-C75 | 150 | 1.59 | 137.2 | |
| Trigonox C | 110 | 240.33 | 142.2 | tert-Butyl peroxybenzoate |
| Trigonox C | 150 | 2.67 | 142.2 | |
| Trigonox 117 | 110 | 137.16 | 136.9 | tert-Butylperoxy 2-ethylhexyl carbonate |
| Trigonox 117 | 150 | 1.52 | 136.9 | |
| Trigonox 201 | 110 | 482.14 | 149.8 | Di-tert-amyl peroxide |
| Trigonox 201 | 150 | 5.91 | 149.8 | |
| Trigonox 29 | 110 | 36.93 | 128.2 | 1,1-Di(tert-butylperoxy)-3,3,5- |
| Trigonox 29 | 150 | 0.84 | 128.2 | trimethyl-cyclohexane |
| Lucidol | 110 | 7.97 | 112.9 | Dibenzoyl peroxide |
| Lucidol | 150 | 0.21 | 112.9 | |
| Trigonox121 | 110 | 6.69 | 111.0 | tert-Amyl peroxy-2-ethylhexanoate |
| Trigonox121 | 150 | 0.13 | 111.0 | |
| Trigonox 101 | 150 | 10.76 | 155.7 | 2,5-Dimethyl-2,5-di(tert-butylperoxy)hexane |
| Perkadox BC | 150 | 8.77 | 153.7 | Dicumyl peroxide |
| Trigonox 301 | 150 | 39.72 | 169.6 | 3,6,9-Triethyl-3,6,9-trimethyl-1,4,7-triperoxonane |

Table 5 lists and compares particle size distributions of an educt polyolefin copolymer and of heterophasic polypropylene compositions according to the invention.

**Table 5**

| Example | Polymer 2 | Example 5 | Example 3 | Example 2 |
|---|---|---|---|---|
| | | | | |
| Particle size [µm] | percentage of particles | | | |
| | | | | |
| [1.6 - 2.0] | 28% | 15% | 2% | 0% |
| [1.2 - 1.6[ | 17% | 5% | 4% | 1 % |
| [0.8 - 1.2[ | 15% | 22% | 13% | 8% |
| [0.4 - 0.8[ | 22 % | 29 % | 44 % | 42 % |
| [0.0 - 0.4[ | 18 % | 29% | 37% | 49% |

This means, that of all the particles of the ethylene rubber copolymer of polymer 1 with a particle diameter of up to 2.0 µm, 28 % of these particles have a particle diameter of from 1.6 to 2.0 µm.

It is to be noted, that the particle sizes given do not imply "average particle diameters" or similar. There is actually no average particle size determined or calculated. What is measured is the particle size distribution in the range of 0.0 to 2.0 µm, which covers effectively all numerically relevant particle sizes. The range of 0.0 to 2.0 µm is - for matters of convenience - divided into 5 sub-intervals, (i.e. 0-0.4, 0.4-0.8, 0.8-1.2, 1.2-1.6 and 1.6-2.0 µm, the upper limit being excluded, except for the last, where 2.0 is included). For each particle is determined, to which of the 5 sub-intervals it belongs and the percentage of each interval is thus determined.

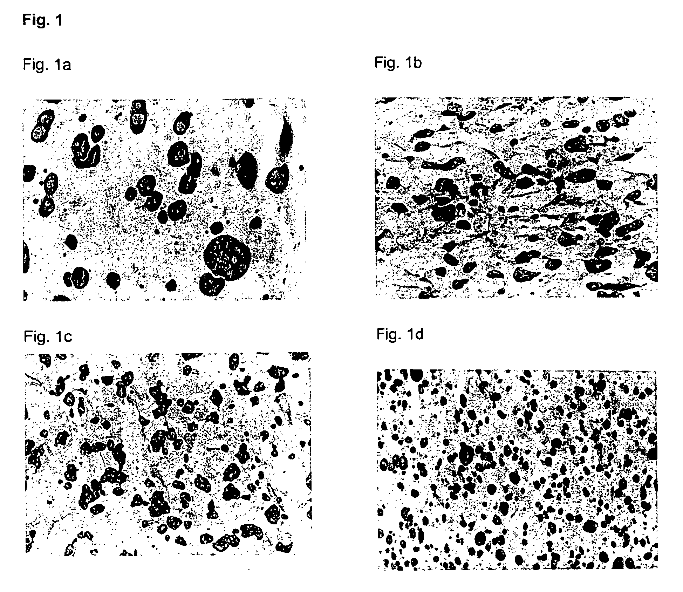

The pictures in Fig. 1a to 1d demonstrate the effectiveness of the invention for obtaining heterophasic copolymers with very finely distributed ethylene rubber copolymers. The width of each of the pictures represents about 11 µm.
Fig. 1a is a picture of base polymer 2
Fig. 1b is a picture of Example 5 (0.17 % peroxide, no bifunct. monomer)
Fig. 1c is a picture of Example 3 (0.32 % peroxide, no bifunct. monomer)
Fig. 1d is a picture of Example 2 (0.37 % peroxide, with bifunct. monomer)

## Claims

1. A heterophasic propylene polymer composition comprising
70 to 95 wt% of a matrix phase comprising a propylene homopolymer and/or a propylene copolymer with at least 80 wt% of propylene and up to 20 wt% of ethylene and/or a C₄-C₁₀ α-olefin, and
5 to 30 wt% of a disperse phase comprising an ethylene rubber copolymer with from 20 to 70 wt% of ethylene and 80 to 30 wt% of propylene and/or a C₄-C₁₀ α-olefin, the ethylene rubber copolymer being distributed within the polymer composition in the form of particles,
which propylene polymer composition has an MFR of > 100 g/10 min (230 °C/2.16 kg), **characterised in that** ethylene rubber copolymer particles with a particle size of < 0.8 *µ*m are present in an amount of at least 50 % based on the total amount of rubber particles with particle sizes of from 0 to 2.0 *µ*m.

2. Propylene polymer composition according to claim 1, **characterised in that** ethylene rubber copolymer particles with a particle size of < 1.2 *µ*m are present in an amount of at least 75 % based on the total amount of rubber particles with particle sizes of from 0 to 2.0 µm.

3. Propylene polymer composition according to any one of claims 1 or 2, **characterised in that** ethylene rubber copolymer particles with a particle size of < 0.8 µm are present in an amount of at least 75 %, preferably of at least 85 %, based on the total amount of rubber particles with particle sizes of from 0 to 2.0 µm.

4. Propylene polymer composition according to any one of claims 1 to 3, **characterised in that** ethylene rubber copolymer particles with a particle size of < 1.2 µm are present in an amount of at least 85 %, preferably of at least 95 %, based on the total amount of rubber particles with particle sizes of from 0 to 2.0 µm.

5. Propylene polymer composition according to any one of claims 1 to 4, **characterised in that** it has a molecular weight ratio of the amount soluble in cold xylene to that insoluble in cold xylene M_{w}(XCS)/M_{w}(XCU) ≥ 1.7, preferably ≥ 1.9.

6. Propylene polymer composition according to any one of claims 1 to 5, **characterised in that** ethylene rubber copolymer particles with a particle size of < 0.8 µm are present in an amount of at least 75 %, preferably of at least 85 %, based on the total amount of rubber particles with particle sizes of from 0 to 2.0 µm and that it has a molecular weight ratio of the amount soluble in cold xylene to that insoluble in cold xylene M_{w}(XCS)/M_{w}(XCU) ≥ 2.3.

7. Propylene polymer composition according to any one of claims 1 to 6, **characterized in that** it contains from 0.01 to 10 wt%, preferably from 0.1 to 2 wt%, based on the weight of the polymer composition of a chemically bound bifunctionally unsaturated monomer.

8. Propylene polymer composition according to claim 7, **characterised in that** ethylene rubber copolymer particles with a particle size of < 1.2 *µ*m are present in an amount of at least 85 %, preferably of at least 95 %, based on the total amount of rubber particles with particle sizes of from 0 to 2.0 *µ*m and that it has a molecular weight ratio of the amount soluble in cold xylene to that insoluble in cold xylene M_{w}(XCS)/M_{w}(XCU) ≥ 2.9, preferably ≥ 3.0.

9. Process for producing a heterophasic propylene polymer composition according to claim 1, comprising the steps of
mixing a heterophasic polyolefin composition comprising
70 to 95 wt% of a matrix phase comprising a propylene homopolymer and/or a propylene copolymer with at least 80 wt% of propylene and up to 20 wt% of ethylene and/or a C₄-C₁₀ α-olefin, and
5 to 30 wt% of a disperse phase comprising an ethylene rubber copolymer with from 20 to 70 wt% of ethylene and 80 to 30 wt% of propylene and/or a C₄-C₁₀ α-olefin, the ethylene rubber copolymer being distributed within the polyolefin composition in the form of particles,
where ethylene rubber copolymer particles with a particle size of from 0.8 to 2.0 µm are present in an amount of ≥ 50 % based on the total amount of rubber particles with particle sizes of from 0 to 2.0 µm, the polyolefin composition having an MFR of from 25 to 100 g/10 min (230 °C/2.16 kg),
with 0.01 to 3 wt% based on the polyolefin composition of an organic peroxide having a half life time t(1/2) at 110°C of > 6 min and a half life time t(1/2) at 150 °C of < 6 min and heating and melting the polyolefin/peroxide mixture.

10. Process according to claim 9, **characterised in that** from 0.05 to 10 wt%, preferably from 0.2 to 3 wt%, based on the weight of the polyolefin composition of a bifunctionally unsaturated monomer is added to the polyolefin composition.

11. Process according to claim 10, **characterised in that** a solution of a bifunctionally unsaturated monomer in an organic solvent is applied to the polyolefin composition during heating and melting the polyolefin/peroxide mixture.

12. Process according to any one of claims 9 to 11, **characterised in that** the polyolefin composition has a molecular weight ratio of the amount soluble in cold xylene to that insoluble in cold xylene M_{W}(XCS)IM_{W}(XCU) of from 1.0 to 1.7.

13. Use of a heterophasic propylene polymer composition according to any one of claims 1 to 8, for the production of articles having a Charpy notched impact strength (according to ISO 179/1 eA) at +23 °C of > 4.5 kJ/m², preferably of > 5 kJ/m², more preferably > 6 kJ/m².

14. Use according to claim 13, **characterised in that** the articles are injection-moulded parts for thin-wall packaging and food packaging applications, e.g. yoghourt cups, ice cream and soft drink cups, margarine trays.

## Patentansprüche

1. Heterophasige Propylenpolymerzusammensetzung, die
70 bis 95 Gew.-% einer Matrixphase, die ein Propylenhomopolymer und/oder ein Propylencopolymer mit mindestens 80 Gew.-% Propylen bis zu 20 Gew.-% Ethylen und/oder eines C₄-C₁₀-α-Olefins umfaßt, und 5 bis 30 Gew.-% einer dispersen Phase, die ein Ethylenkautschukcopolymer mit 20 bis 70 Gew.-% Ethylen und 80 bis 30 Gew.-% Propylen und/oder eines C₄-C₁₀-α-Olefins umfaßt, wobei das Ethylenkautschukcopolymer in Form von Teilchen in der Polymerzusammensetzung verteilt ist,
enthält und eine MFR von> 100 g/10 min (230°C/2,16 kg) aufweist, **dadurch gekennzeichnet, daß** Ethylenkautschukcopolymerteilchen mit einer Teilchengröße von < 0,8 *µ*m in einer Menge von mindestens 50%, bezogen auf die Gesamtmenge der Kautschukteilchen mit Teilchengrößen von 0 bis 2,0 *µ*m, vorliegen.

2. Propylenpolymerzusammenset zung nach Anspruch 1, **dadurch gekennzeichnet, daß** Ethylenkautschukcopolymerteilchen mit einer Teilchengröße von < 1,2 *µ*m in einer Menge von mindestens 75%, bezogen auf die Gesamtmenge der Kautschukteilchen mit Teilchengrößen von 0 bis 2,0 *µ*m, vorliegen.

3. Propylenpolymerzusammensetzung nach Anspruch 1 oder 2, **dadurch gekennzeichnet, daß** Ethylenkautschukcopolymerteilchen mit einer Teilchengröße von < 0,8 *µ*m in einer Menge von mindestens 75% und vorzugsweise mindestens 85%, bezogen auf die Gesamtmenge der Kautschukteilchen mit Teilchengrößen von 0 bis 2,0 *µ*m, vorliegen.

4. Propylenpolymerzusammensetzung nach einem der Ansprüche 1 bis 3, **dadurch gekennzeichnet, daß** Ethylenkautschukcopolymerteilchen mit einer Teilchengröße von < 1,2 *µ*m in einer Menge von mindestens 85% und vorzugsweise mindestens 95%, bezogen auf die Gesamtmenge der Kautschukteilchen mit Teilchengrößen von 0 bis 2,0 µm, vorliegen.

5. Propylenpolymerzusammensetzung nach einem der Ansprüche 1 bis 4, **dadurch gekennzeichnet, daß** sie ein Molekulargewichtsverhältnis der in kaltem Xylol löslichen Menge zu der in kaltem Xylol unlöslichen Menge M_{w}(XCS)/M_{w}(XCU) von ≥ 1,7 und vorzugsweise ≥ 1,9 aufweist.

6. Propylenpolymerzusammensetzung nach einem der Ansprüche 1 bis 5, **dadurch gekennzeichnet, daß** Ethylenkautschukcopolymerteilchen mit einer Teilchengröße von < 0,8 µm in einer Menge von mindestens 75% und vorzugsweise mindestens 85%, bezogen auf die Gesamtmenge der Kautschukteilchen mit Teilchengrößen von 0 bis 2,0 *µ*m, vorliegen und daß sie ein Molekulargewichtsverhältnis der in kaltem Xylol löslichen Menge zu der in kaltem Xylol unlöslichen Menge M_{w}(XCS)/M_{w}(XCU) von ≥ 2,3 aufweist.

7. Propylenpolymerzusammensetzung nach einem der Ansprüche 1 bis 6, **dadurch gekennzeichnet, daß** sie 0,01 bis 10 Gew.-% und vorzugsweise 0,1 bis 2 Gew.-%, bezogen auf das Gewicht der Polymerzusammensetzung, eines chemisch gebundenen bifunktionell ungesättigten Monomers enthält.

8. Propylenpolymerzusammensetzung nach Anspruch 7,
**dadurch gekennzeichnet, daß** Ethylenkautschukcopolymerteilchen mit einer Teilchengröße von < 1,2 *µ*m in einer Menge von mindestens 85% und vorzugsweise mindestens 95%, bezogen auf die Gesamtmenge der Kautschukteilchen mit Teilchengrößen von 0 bis 2,0 *µ*m, vorliegen und daß sie ein Molekulargewichtsverhältnis der in kaltem Xylol löslichen Menge zu der in kaltem Xylol unlöslichen Menge M_{w}(XCS)/M_{w}(XCU) von ≥ 2,9 und vorzugsweise ≥ 3,0 aufweist.

9. Verfahren zur Herstellung einer heterophasigen Propylenpolymerzusammensetzung nach Anspruch 1, bei dem man
eine heterophasige Polyolefinzusammensetzung, die 70 bis 95 Gew.-% einer Matrixphase, die ein Propylenhomopolymer und/oder ein Propylencopolymer mit mindestens 80 Gew.-% Propylen bis zu 20 Gew.-% Ethylen und/oder eines C₄-C₁₀-α-Olefins umfaßt, und 5 bis 30 Gew.-% einer dispersen Phase, die ein Ethylenkautschukcopolymer mit 20 bis 70 Gew.-% Ethylen und 80 bis 30 Gew-% Propylen und/oder eines C₄-C₁₀-α-Olefins umfaßt, wobei das Ethylenkautschukcopolymer in Form von Teilchen in der Polymerzusammensetzung verteilt ist,
wobei Ethylenkautschukcopolymerteilchen mit einer Teilchengröße von 0,8 bis 2,0 *µ*m in einer Menge von ≥ 50%, bezogen auf die Gesamtmenge der Kautschukteilchen mit Teilchengrößen von 0 bis 2,0 *µ*m, vorliegen, enthält und eine MFR von 25 bis 100 g/10 min (230°C/2,16 kg) aufweist,
mit 0,01 bis 3 Gew.-%, bezogen auf die Polyolefinzusammensetzung, eines organischen Peroxids mit einer Halbwertszeit t(1/2) bei 110°C von > 6 min und einer Halbwertszeit t(1/2) bei 150°C von < 6 min vermischt und die Polyolefin/Peroxid-Mischung erhitzt und aufschmilzt.

10. Verfahren nach Anspruch 9, **dadurch gekennzeichnet, daß** man 0,05 bis 10 Gew.-% und vorzugsweise 0,2 bis 3 Gew.-%, bezogen auf das Gewicht der Polymerzusammensetzung, eines bifunktionell ungesättigten Monomers zu der Polyolefinzusammensetzung gibt.

11. Verfahren nach Anspruch 10, **dadurch gekennzeichnet, daß** man beim Erhitzen und Aufschmelzen der Polyolefin/Peroxid-Mischung eine Lösung eines bifunktionell ungesättigten Monomers in einem organischen Lösungsmittel auf die Polyolefinzusammensetzung aufbringt.

12. Verfahren nach einem der Ansprüche 9 bis 11, **dadurch gekennzeichnet, daß** die Polyolefinzusammensetzung ein Molekulargewichtsverhältnis der in kaltem Xylol löslichen Menge zu der in kaltem Xylol unlöslichen Menge M_{w}(XCS)/M_{w}(XCU) von 1,0 bis 1,7 aufweist.

13. Verwendung einer heterophasigen Propylenpolymerzusammensetzung nach einem der Ansprüche 1 bis 8 zur Herstellung von Gegenständen mit einer Charpy-Kerbschlagzähigkeit (gemäß ISO 179/1eA) bei +23°C von > 4,5 kJ/m², vorzugsweise > 5 kJ/m² und besonders bevorzugt > 6 kJ/m².

14. Verwendung nach Anspruch 13, **dadurch gekennzeichnet, daß** es sich bei den Gegenständen um Spritzgußteile für Anwendungen im Bereich dünnwandige Verpackungen und Lebensmittelverpackungen, z.B. Joghurtbecher, Eiscreme- und Softdrinkbecher und Margarineschalen, handelt.

## Revendications

1. Composition à base d'un polymère de propylène hétérophasique comprenant
de 70 à 95 % en poids d'une phase matricielle comprenant un homopolymère de propylène et/ou un copolymère de propylène avec au moins 80 % en poids de propylène et jusqu'à 20 % en poids d'éthylène et/ou d'une α-oléfine en C₄ à C₁₀, et
de 5 à 30 % en poids d'une phase dispersée comprenant un copolymère élastomère à base d'éthylène avec de 20 à 70 % en poids d'éthylène et de 80 à 30 % en poids de propylène et/ou d'une α-oléfine en C₄ à C₁₀, le copolymère élastomère à base d'éthylène étant distribué à l'intérieur de la composition polymère sous la forme de particules,
laquelle composition à base de polymère de propylène a un MFR > à 100 g/10 min (230°C, 2,16 kg), **caractérisée en ce que** les particules du copolymère élastomère à base d'éthylène avec une taille de particules < à 0,8 µm sont présentes en une quantité d'au moins 50 % sur la base de la quantité totale de particules élastomères avec des tailles de particules allant de 0 à 2,0 *µ*m.

2. Composition à base d'un polymère de propylène selon la revendication 1, **caractérisée en ce que** les particules du copolymère élastomère à base d'éthylène avec une taille de particules < à 1,2 *µ*m sont présentes en une quantité d'au moins 75 % sur la base de la quantité totale de particules élastomères avec des tailles de particules allant de 0 à 2,0 *µ*m.

3. Composition à base d'un polymère de propylène selon l'une quelconque des revendications 1 ou 2, **caractérisée en ce que** les particules du copolymère élastomère à base d'éthylène avec une taille de particules < à 0,8 *µ*m sont présentes en une quantité d'au moins 75 %, de préférence d'au moins 85 %, sur la base de la quantité totale de particules élastomères avec des tailles de particules allant de 0 à 2,0 *µ*m.

4. Composition à base d'un polymère de propylène selon l'une quelconque des revendications 1 à 3, **caractérisée en ce que** les particules du copolymère élastomère à base d'éthylène avec une taille de particules < à 1,2 *µ*m sont présentes en une quantité d'au moins 85 %, de préférence d'au moins 95 %, sur la base de la quantité totale de particules élastomères avec des tailles de particules allant de 0 à 2,0 *µ*m.

5. Composition à base d'un polymère de propylène selon l'une quelconque des revendications 1 à 4, **caractérisée en ce qu'**elle a un rapport des poids moléculaires de la quantité soluble dans le xylène froid sur celle insoluble dans le xylène froid PM(XCS)/PM(XCU) ≥ à 1,7, de préférence ≥ à 1,9.

6. Composition à base d'un polymère de propylène selon l'une quelconque des revendications 1 à 5, **caractérisée en ce que** les particules du copolymère élastomère à base d'éthylène avec une taille de particules < à 0,8 µm sont présentes en une quantité d'au moins 75 %, de préférence d'au moins 85 %, sur la base de la quantité totale de particules élastomères avec des tailles de particules allant de 0 à 2,0 *µ*m et qu'elle a un rapport des poids moléculaires de la quantité soluble dans le xylène froid sur celle insoluble dans le xylène froid PM(XCS)/PM(XCU) ≥ à 2,3.

7. Composition à base d'un polymère de propylène selon l'une quelconque des revendications 1 à 6, **caractérisée en ce qu'**elle contient de 0,01 à 10 % en poids, de préférence de 0,1 à 2 % en poids, sur la base du poids de la composition polymère d'un monomère à deux fonctions insaturées chimiquement lié.

8. Composition à base d'un polymère de propylène selon la revendication 7, **caractérisée en ce que** les particules du copolymère élastomère à base d'éthylène avec une taille de particules < à 1,2 µm sont présentes en une quantité d'au moins 85 %, de préférence d'au moins 95 %, sur la base de la quantité totale de particules élastomères avec des tailles de particules allant de 0 à 2,0 *µ*m et qu'elle a un rapport des poids moléculaires de la quantité soluble dans le xylène froid sur celle insoluble dans le xylène froid PM(XCS)/PM(XCU) ≥ à 2,9, de préférence ≥ à 3,0.

9. Procédé de production d'une composition à base d'un polymère de propylène hétérophasique selon la revendication 1, comprenant les étapes consistant à :
mélanger une composition à base de polyoléfine hétérophasique comprenant
de 70 à 95 % en poids d'une phase matricielle comprenant un homopolymère de propylène et/ou un copolymère de propylène avec au moins 80 % en poids de propylène et jusqu'à 20 % en poids d'éthylène et/ou d'une α-oléfine en C₄ à C₁₀, et de 5 à 30 % en poids d'une phase dispersée comprenant un copolymère élastomère à base d'éthylène avec de 20 à 70 % en poids d'éthylène et de 80 à 30 % en poids de propylène et/ou d'une α-oléfine en C₄ à C₁₀, le copolymère élastomère à base d'éthylène étant distribué à l'intérieur de la composition polyoléfinique sous la forme de particules,
où les particules du copolymère élastomère à base d'éthylène avec une taille de particules de 0,8 à 2,0 *µ*m sont présentes en une quantité ≥ à 50 % sur la base de la quantité totale de particules élastomères avec des tailles de particules allant de 0 à 2,0 *µ*m, la composition polyoléfinique ayant un MFR de 25 à 100,g/10 min (230°C, 2,16 kg),
avec de 0,01 à 3 % en poids sur la base de la composition polyoléfinique d'un peroxyde organique ayant un temps de demi-vie t(1/2) à 110°C > à 6 min et un temps de demi-vie t(1/2) à 150°C < à 6 min,
et, chauffer et fondre le mélange polyoléfine/peroxyde.

10. Procédé selon la revendication 9, **caractérisé en ce que** de 0,05 à 10 % en poids, de préférence de 0,2 à 3 % en poids, sur la base du poids de la composition polyoléfinique d'un monomère à deux fonctions insaturées sont ajoutés à la composition polyoléfinique.

11. Procédé selon la revendication 10, **caractérisé en ce qu'**une solution d'un monomère à deux fonctions insaturées dilué dans un solvant organique est appliquée à la composition polyoléfinique au cours du chauffage et de la fusion du mélange polyoléfine/peroxyde.

12. Procédé selon l'une quelconque des revendications 9 à 11, **caractérisé en ce que** la composition polyoléfinique a un rapport des poids moléculaires de la quantité soluble dans le xylène froid sur celle insoluble dans le xylène froid PM(XCS)/PM(XCU) allant de 1,0 à 1,7.

13. Utilisation d'une composition à base d'un polymère de propylène hétérophasique selon l'une quelconque des revendications 1 à 8, en vue de la production d'articles ayant une résilience Charpy sur éprouvette entaillée (selon la norme ISO 179/1eA) à +23°C > à 4,5 kJ/m², de préférence > à 5 kJ/m² , plus préférablement > à 6 kJ/m².

14. Utilisation selon la revendication 13, **caractérisée en ce que** les articles sont des pièces moulées par injection en vue d'applications dans les emballages à parois minces et dans les emballages alimentaires, par exemple les pots de yaourt, les pots de crème glacée et les gobelets de boisson gazeuse, les pots de margarine.
